# EUROPÄISCHE PATENTANMELDUNG

(11) **EP 4 261 077 A1**
(43) Veröffentlichungstag der Anmeldung: **18.10.2023**
(21) Anmeldenummer: 23157758.6
(22) Anmeldetag: 21.02.2023
(51) Int. Cl.: B60L 50/20, B62M 6/45

(54) **VERFAHREN ZUR STEUERUNG EINER ANWENDUNGSSOFTWARE EINES ELEKTROFAHRRADS**

(30) Priorität: 11.04.2022 DE 102022203602
(71) Anmelder: Robert Bosch GmbH, 70442 Stuttgart (DE)
(72) Erfinder: Drozd, Kamil, 65760 Eschborn (DE); Chou, Yi-Jin, 60486 Frankfurt (DE); Kneissl, Bastian, 65719 Hofheim (DE); Granja Bernardino, Diogo Filipe, 60385 Frankfurt Am Main (DE); Kraemer, Daniel, 60431 Frankfurt (DE); Shanley, Joseph, 70199 Stuttgart (DE); Emir, Mert, 60316 Frankfurt Am Main (DE)

(57) **Zusammenfassung**

Die Erfindung betrifft ein Verfahren zur Steuerung einer Anwendungssoftware, wobei die Anwendungssoftware durch eine Steuervorrichtung für ein Fahrrad, insbesondere für ein Elektrofahrrad, ausgeführt wird, umfassend folgende Schritte:
- Herstellung einer drahtlosen Kommunikationsverbindung zwischen dem Elektrofahrrad und der Steuervorrichtung,
- Bereitstellung einer Freigabeinformation des Elektrofahrrads;
- Freischaltung einer Funktion der Anwendungssoftware und/oder automatische Aktivierung der Anwendungssoftware.

## Beschreibung

### Offenbarung der Erfindung

Die Erfindung betrifft ein Verfahren zur Steuerung einer Anwendungssoftware, wobei die Anwendungssoftware durch eine Steuervorrichtung für ein Fahrrad, insbesondere für ein Elektrofahrrad, ausgeführt wird, umfassend folgende Schritte:
- Herstellung einer drahtlosen Kommunikationsverbindung zwischen dem Elektrofahrrad und der Steuervorrichtung,
- Bereitstellung einer Freigabeinformation des Elektrofahrrads;
- Freischaltung einer Fahrfunktion der Anwendungssoftware und/oder automatische Aktivierung der Anwendungssoftware.

Vorteilhaft wird dadurch die Fahrfunktion nur freigeschaltet, wenn sie sinnvoll eingesetzt werden kann.

Die Steuervorrichtung ist im mit dem Elektrofahrrad verbundenen Zustand derart verbunden, dass Daten und/oder Informationen zwischen der Steuervorrichtung und dem Elektrofahrrad austauschbar sind. Insbesondere weist die Steuervorrichtung eine Anzeigeeinheit auf, die zur Anzeige von Betriebsinformationen des Elektrofahrrads ausgebildet ist. Bei den Betriebsinformationen kann es sich beispielsweise um einen Ladezustand einer Energieversorgungseinheit des Elektrofahrrads, eine Geschwindigkeit des Elektrofahrrads, einen derzeit gewählten Unterstützungsmodus, eine Ortsinformation oder eine Fehlerinformation handeln. Des Weiteren ist denkbar, dass das Elektrofahrrad weitere Betriebsparameter bereitstellt, beispielsweise eine Ortskenngröße, die als eine geographische Koordinate und/oder eine Höheninformation ausgebildet sein kann. Zudem kann die Steuervorrichtung zur Steuerung oder Regelung des Elektrofahrrads ausgebildet sein. Unter einer Steuerung des Elektrofahrrads soll in diesem Zusammenhang insbesondere verstanden werden, dass die Steuervorrichtung zur Steuerung, Regelung oder Einstellung einer Elektrofahrradfunktion ausgebildet ist. Beispielsweise ist denkbar, dass die Steuervorrichtung derart ausgebildet ist, dass eine Antriebseinheit des Elektrofahrrads mittels der Steuervorrichtung aktivierbar, deaktivierbar und/oder sperrbar ist. Es ist ebenso denkbar, dass die Steuervorrichtung zur Einstellung des Elektrofahrrads durch den Benutzer ausgebildet ist. Beispielsweise ist denkbar, dass über die Steuervorrichtung die Unterstützungsmodi des Elektrofahrrads einstellbar sind, wobei abhängig von dem gewählten Unterstützungsmodus die Antriebseinheit des Elektrofahrrads unterschiedlich angesteuert wird. Die Steuervorrichtung ist vorzugsweise als eine lösbar mit dem Elektrofahrrad verbindbare Vorrichtung ausgebildet, beispielsweise als ein Smartphone oder als eine Smartwatch.

Die Steuervorrichtung kann zur Ausführung einer einzelnen Anwendungssoftware ausgebildet sein. Beispielsweise kann die Steuervorrichtung als ein abnehmbarer Boardcomputer für das Elektrofahrrad ausgebildet sein. Es ist allerdings ebenso denkbar, dass die Steuervorrichtung zu einer Vielzahl von Anwendungssoftware ausgebildet ist, wobei zumindest eine Anwendungssoftware insbesondere speziell für das Elektrofahrrad vorgesehen ist, beispielsweise in Form eines Smartphones. Die Anwendungssoftware weist mehrere Funktionen auf, die jeweils zur Steuerung oder Regelung und/oder Anzeige von Betriebsinformationen ausgebildet sind. Die Anwendungssoftware weist dabei zumindest eine Fahrfunktion auf, die nur im mit dem Elektrofahrrad verbundenen Zustand ausführbar ist und/oder nur in der Nähe des Elektrofahrrads sinnvoll einsetzbar ist. Zudem weist die Anwendungssoftware zumindest eine Basisfunktion, vorzugsweise eine Vielzahl von Basisfunktionen, auf, die auch im nicht mit dem Elektrofahrrad verbundenen Zustand nutzbar sind.

Die Fahrfunktion ist insbesondere derart ausgebildet, dass eine von dem Elektrofahrrad und/oder der Steuervorrichtung ermittelte Geschwindigkeit des Elektrofahrrads angezeigt wird. Alternativ oder zusätzlich ist denkbar, dass die Fahrfunktion zur Anzeige von Fahrtinformationen ausgebildet, die von dem Elektrofahrrad und/oder der Steuervorrichtung bereitgestellt werden. Die Fahrtinformationen können beispielsweise eine Fahrtzeit, eine mittlere Fahrgeschwindigkeit, eine gefahrene Strecke oder dergleichen insbesondere bezogen auf die aktuelle Fahr umfassen. Zudem ist denkbar, dass die Fahrfunktion zur Anzeige einer Navigation ausgebildet ist. Die Fahrfunktion kann als alleinige Anzeige von Informationen oder zusätzlich zur Steuerung des Elektrofahrrads vorgesehen sein.

Unter einem Elektrofahrrad soll im Zusammenhang dieser Anmeldung insbesondere ein Fahrrad verstanden, dass eine Antriebseinheit zur Unterstützung des Fahrers aufweist. Das Elektrofahrrad ist vorzugsweise als ein eBike, ein Pedelec, ein Lastenfahrrad, ein Klappfahrrad oder dergleichen ausgebildet. Die Antriebseinheit weist einen Motor auf, der beispielsweise als ein Mittelmotor oder als ein Nabenmotor ausgebildet sein kann. Der Motor ist vorzugsweise als ein Elektromotor ausgebildet. Die Antriebseinheit ist mit einer Energieversorgungsvorrichtung zur Versorgung der Antriebseinheit mit Energie verbunden. Die Energieversorgungseinheit ist vorzugsweise als ein Akkupack ausgebildet und weist ein Akkugehäuse auf, das bevorzugt lösbar mit einem Rahmen des Fahrrads verbunden ist. Das Elektrofahrrad umfasst eine Elektronik mit einer Steuereinheit zur Steuerung oder Regelung des Elektrofahrrads. Die Elektronik umfasst vorzugsweise eine Sensoreinheit, wobei die Sensoreinheit beispielsweise Bewegungssensoren, Drehmomentsensoren, Geschwindigkeitssensoren, GPS-Sensoren, Magnetsensoren oder dergleichen aufweisen kann. Zudem umfasst die Elektronik eine Kommunikationsschnittstelle zur drahtlosen Verbindung des Elektrofahrrads mit einer Steuervorrichtung und/oder einem Server. Die Steuervorrichtung weist eine Kommunikationsschnittstelle zur drahtlosen Verbindung auf, die mit der drahtlosen Kommunikationsschnittstelle des Elektrofahrrads korrespondiert.

Die Kommunikationsschnittstellen können beispielsweise als eine Bluetooth-, WLAN-, LTE-, 5G-, Zigbee-Schnittstelle oder dergleichen ausgebildet sein. Das Elektrofahrrad und/oder die Steuervorrichtung können eine oder mehrere Kommunikationsschnittstellen aufweisen.

Bei der Herstellung der drahtlosen Kommunikationsverbindung zwischen dem Elektrofahrrad und der Steuervorrichtung kann beispielsweise über eine Kopplung des Elektrofahrrads und der Steuervorrichtung erfolgen. Die Kopplung kann beispielsweise durch eine gegenseitige Authentifizierung und/oder ein Austausch von Identifikationsinformationen erfolgen. Insbesondere kann die erstmalige Herstellung der drahtlosen Kommunikationsverbindung mittels eines Pairings erfolgen. Bei der Herstellung der drahtlosen Kommunikationsverbindung kann es sich um eine automatische, semi-automatische oder manuelle Herstellung der drahtlosen Kommunikationsverbindung handeln. Beispielsweise erfolgt eine automatische Verbindung bei bereits gepairten Geräten.

Des Weiteren wird vorgeschlagen, dass eine zusätzliche Bereitstellung einer Freigabeinformation der Steuervorrichtung erfolgt. Weiterhin wird vorgeschlagen, dass die Freigabeinformation der Steuervorrichtung als eine Berechtigung zur Nutzung einer Ortskenngröße der Steuervorrichtung und/oder als Bereitstellung einer Ortskenngröße der Steuervorrichtung ausgebildet ist. Die Ortskenngröße ist vorzugsweise derart ausgebildet, dass mittels der Ortskenngröße eine Routennavigation erfolgen kann.

Zudem wird vorgeschlagen, dass die Herstellung der drahtlosen Kommunikationsverbindung mittels einer kurzreichweitigen Kommunikationsschnittstelle erfolgt. Vorteilhaft ist damit die Funktion nur in der Nähe des Elektrofahrrads freigeschaltet beziehungsweise aktiviert. Die kurzreichweitige Kommunikationsschnittstelle kann beispielsweise als eine Bluetooth- oder eine RFID Schnittstelle ausgebildet sein. Die kurzreichweitige Kommunikationsschnittstelle ist insbesondere derart ausgebildet, dass die drahtlose Kommunikationsverbindung nur innerhalb eines Abstands von 100 m, vorzugsweise 25 m, bevorzugt 10 m, herstellbar ist.

Des Weiteren wird vorgeschlagen, dass die Freigabeinformation des Elektrofahrrads als ein Betriebsstatus ausgebildet ist, wobei mittels des Betriebsstatus ein Stillstand des Zweirads ermittelt wird. Vorteilhaft wird dadurch die Sicherheit des Systems erhöht, da während der Fahrt keine ungewollte Freischaltung der Funktion erfolgen kann. Der Betriebsstatus ist vorzugsweise derart ausgebildet, dass ohne eine weitere Auswertung des Betriebsstatus des Elektrofahrrads der Stillstand des Elektrofahrrads ermittelbar ist. Es ist allerdings ebenso denkbar, dass Sensordaten oder andere Daten als Freigabeinformation des Elektrofahrrads der Steuervorrichtung bereitgestellt werden. Beispielsweise ein Geschwindigkeitssignal, ein Bewegungssignal, etc.

Weiterhin wird vorgeschlagen, dass die Freischaltung der Fahrfunktion durch eine erste Benachrichtigung, insbesondere eine Nachricht, einen Hinweis oder ein Betätigungsfeld in der Anwendungssoftware angezeigt wird. Vorteilhaft wird der Fahrer dadurch auf die Fahrfunktion und die Einsatzmöglichkeit der Fahrfunktion hingewiesen. Zudem wird vorgeschlagen, dass die Fahrfunktion zur Anzeige von Betriebskenngrößen des Zweirads und/oder zur Steuerung des Zweirads ausgebildet ist. Bei der Betriebskenngröße kann es sich beispielsweise um einen Ladezustand des Akkupacks des Elektrofahrrads, einen derzeit gewählten Unterstützungsgrad der Antriebseinheit des Elektrofahrrads, eine Geschwindigkeit des Elektrofahrrads oder dergleichen handeln. Die Steuerung kann beispielsweise durch Wahl des Unterstützungsgrad erfolgen.

Des Weiteren wird vorgeschlagen, dass basierend auf dem Betriebsstatus eine zweite Benachrichtigung, insbesondere eine Nachricht oder ein Hinweis, außerhalb der Anwendungssoftware auf der Steuervorrichtung angezeigt wird. Die Nachricht oder der Hinweis kann beispielsweise mittels einer Anzeige auf dem Bildschirm der Steuervorrichtung und/oder durch ein akustisches Signal der Steuervorrichtung erfolgen. Vorteilhaft kann dadurch der Fahrer wirksam auf die freigeschaltete Fahrfunktion hingewiesen werden.

Alternativ oder zusätzlich wird vorgeschlagen, dass die Freischaltung der Fahrfunktion der Anwendungssoftware und/oder die automatische Aktivierung der Anwendungssoftware in Abhängigkeit einer Signalstärke der drahtlosen Kommunikationsverbindung erfolgt. Vorteilhaft kann dadurch der Bereich, in welchem die Freischaltung der Funktion erfolgt noch genauer definiert werden.

Alternativ oder zusätzlich wird ferner vorgeschlagen, dass die Freischaltung der Fahrfunktion der Anwendungssoftware und/oder automatische Aktivierung der Anwendungssoftware in Abhängigkeit einer Positionierung und/oder Ausrichtung der Steuervorrichtung erfolgt. Vorteilhaft kann dadurch die Freischaltung der Fahrfunktion noch genauer auf den Fahrerwunsch angepasst werden. Bei der Positionierung und/oder Ausrichtung der Steuervorrichtung handelt es sich dabei insbesondere um eine Positionierung und/oder Anordnung der Steuervorrichtung relativ zur Schwerkraft und/oder relativ zu einem Bezugspunkt des Elektrofahrrads, wie beispielsweise einem Boardcomputer oder der Antriebseinheit des Elektrofahrrads. Bei der Positionierung handelt es sich dabei insbesondere um eine räumliche Anordnung, beispielsweise messbar mittels Abständen zwischen der Steuervorrichtung und dem Elektrofahrrad. Bei der Anordnung handelt es sich insbesondere um eine Ausrichtung, die im mit dem Elektrofahrrad mechanisch verbundenen Zustand der Steuervorrichtung durch Schwenken, Drehen, etc. veränderbar ist.

Alternativ oder zusätzlich wird ferner vorgeschlagen, dass die Freischaltung der Fahrfunktion der Anwendungssoftware und/oder automatische Aktivierung der Anwendungssoftware in Abhängigkeit eines Ladezustands oder eines Ladevorgangs der Steuervorrichtung erfolgt. Vorteilhaft kann dadurch die Freischaltung weiter auf den Fahrer angepasst werden. Insbesondere erfolgt die Freischaltung, falls die Steuervorrichtung durch den Akkupack des Elektrofahrrads mit Energie versorgt wird.

Alternativ oder zusätzlich wird ferner vorgeschlagen, dass die Freischaltung der Fahrfunktion der Anwendungssoftware und/oder automatische Aktivierung der Anwendungssoftware in Abhängigkeit einer Routeninformation erfolgt. Vorteilhaft kann über das Vorliegen einer Routeninformation der Wunsch des Fahrers zur Freischaltung der Fahrfunktion erkannt werden. Die Routeninformation kann beispielsweise durch den Fahrer mittels der Anwendungssoftware, insbesondere einer anderen Funktion der Anwendungssoftware, geplant und/oder eingegeben werden.

Die Bedingungen zur Freischaltung der Funktion können dabei jeweils voreingestellt sein. Die Parameter, Algorithmen, Grenzwerte, etc. zur Bestimmung, ob die Freischaltung erfolgen kann, können vorzugsweise mittels eines maschinellen Lernsystems ermittelt werden.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine schematische Ansicht eines Systems zur Durchführung eines Verfahrens zur Anpassung einer Steuervorrichtung für ein Elektrofahrrad;
Fig. 2 ein Flussdiagramm des Verfahrens zur Anpassung einer Steuervorrichtung für ein Elektrofahrrad;
Fig. 3a eine Anzeige der Steuervorrichtung ohne eine freigeschaltete Fahrfunktion;
Fig. 3b eine Anzeige der Steuervorrichtung mit freigeschalteter Fahrfunktion;
Fig. 3c eine Anzeige der Fahrfunktion der Steuervorrichtung.

### Beschreibung der Ausführungsbeispiele

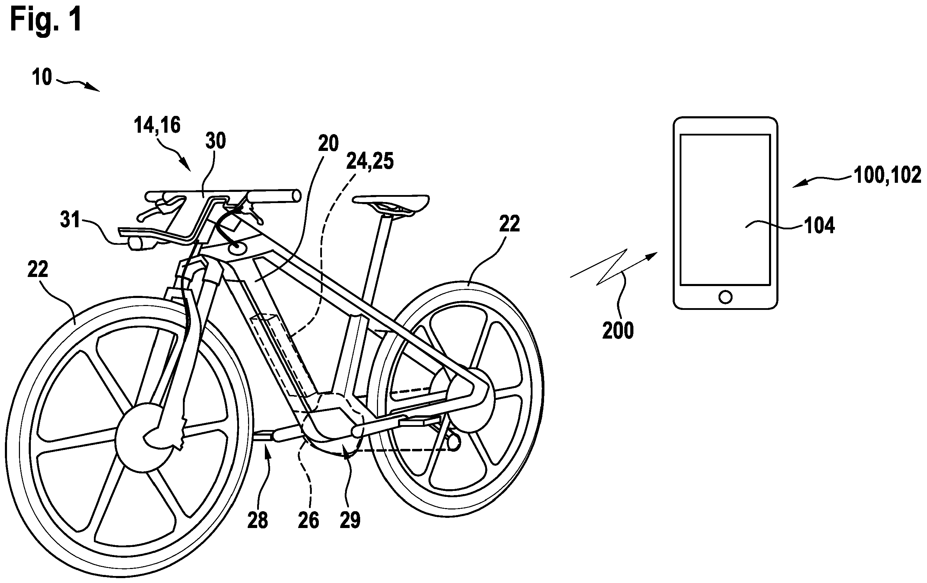

In Fig. 1 ist ein System 10 aufweisend ein Zweirad 14 und eine Steuervorrichtung 100 für das Zweirad 14 beschrieben. Das Zweirad 14 ist beispielhaft als ein Elektrofahrrad 16 ausgebildet. Das Elektrofahrrad 16 kann beispielsweise als ein Pedelec oder als ein E-Bike ausgebildet sein.

Das Elektrofahrrad 16 weist ein Gehäuse in Form eines Rahmens 20 beziehungsweise eines Fahrradrahmens auf. Mit dem Rahmen 20 sind zwei Räder 22 verbunden. Zudem weist das Elektrofahrrad 16 einen Energieversorgungseinheit 24 in Form eines Akkupacks 25 auf, die durch den Fahrer entnehmbar im Rahmen des Elektrofahrrads 16 angeordnet ist. Zudem weist das Elektrofahrrad 16 eine Antriebseinheit 26 auf, die einen Elektromotor beziehungsweise einen Hilfsmotor umfasst. Der Elektromotor ist vorzugsweise als ein Permanentmagnet-erregter, bürstenloser Gleichstrommotor ausgebildet. Der Elektromotor ist beispielhaft als ein Mittelmotor ausgebildet, wobei auch ein Nabenmotor oder dergleichen denkbar ist. Das Elektrofahrrad 16, insbesondere die Antriebseinheit 26 des Elektrofahrrads 16, wird über die Energieversorgungseinheit 24 mit Energie versorgt. Die Energieversorgungseinheit 24 kann von außen am Rahmen 20 befestigbar oder wie beispielhaft dargestellt im Rahmen 20 integriert ausgebildet sein.

Die Antriebseinheit 26 umfasst eine eine Steuereinheit umfassende Elektronik (nicht dargestellt), die zur Steuerung oder Regelung des Elektrofahrrads 16, insbesondere des Elektromotors, ausgebildet ist. Das Elektrofahrrad 16 weist eine Tretkurbel 28 auf. Die Tretkurbel 28 weist eine Tretkurbelwelle (nicht dargestellt) auf.

Die Elektronik und die Antriebseinheit 26 mit dem Elektromotor und der Tretkurbelwelle sind in einem mit dem Rahmen 20 verbundenen Antriebsgehäuse 29 angeordnet. Die Antriebsbewegung des Elektromotors wird vorzugsweise über ein Getriebe (nicht dargestellt) auf die Tretkurbelwelle übertragen, wobei die Größe der Unterstützung durch die Antriebseinheit 26 mittels der Elektronik gesteuert oder geregelt wird. Die Elektronik ist dazu ausgebildet, die Antriebseinheit derart anzusteuern, dass der Fahrer des Elektrofahrrads 16 beim Pedalieren unterstützt wird. Vorzugsweise ist die Steuereinheit durch den Fahrer bedienbar ausgebildet, sodass der Fahrer den Unterstützungsgrad einstellen kann.

Die Elektronik umfasst eine nicht dargestellte Kommunikationsschnittstelle, die zur drahtlosen Verbindung des Elektrofahrrads 16 mit der Steuervorrichtung 100 ausgebildet ist. Die Kommunikationsschnittstelle ist beispielhaft als eine kurzreichweite Kommunikationsschnittstelle, insbesondere eine Bluetooth Schnittstelle, ausgebildet ist. Das Elektrofahrrad 16 umfasst zudem eine zweite Kommunikationsschnittstelle in Form einer langreichweitigen Kommunikationsschnittstelle, insbesondere einer LTE-Schnittstelle. Im Gegensatz zu der kurzreichweitigen Kommunikationsschnittstelle ist mittels der langreichweitigen Kommunikationsschnittstelle eine direkte Datenverbindung mit Servern, die beispielhaft eine Verbindung zum Internet aufweisen, möglich.

Zudem umfasst das Elektrofahrrad 16, insbesondere die Elektronik des Elektrofahrrads 16, eine Sensoreinheit. Die Sensoreinheit umfasst beispielhaft einen Geschwindigkeitssensor, zumindest einen Bewegungssensor, einen GPS-Sensor zur Erfassung einer Ortskenngröße und einen Drehmomentsensor.

Zudem umfasst das Elektrofahrrad 16 eine Bedieneinheit (nicht dargestellt) zur Bedienung des Elektrofahrrads 16. Die Bedieneinheit ist an einem Lenker 30 des Elektrofahrrads 16 angeordnet. Beispielhaft ist die Bluetooth Schnittstelle in einem Gehäuse der Bedieneinheit angeordnet. Die Bedieneinheit weist beispielhaft einen nicht näher dargestellten Ein/Aus-Schalter auf, wobei mittels einer Betätigung des Schalters das Elektrofahrrad 16, insbesondere die Antriebseinheit 26, aktivierbar ausgebildet ist. Zudem ist die Elektronik mittels der Bedieneinheit ansteuerbar ausgebildet, beispielsweise ist mittels einer Bedienung der Bedieneinheit eine Auswahl eines Unterstützungsmodus des Elektrofahrrads 16 möglich.

Die Steuervorrichtung 100 ist beispielhaft als ein Smartphone 102 ausgebildet. Die Steuervorrichtung 100 umfasst eine Anzeigeeinheit 104, die zur Anzeige von Informationen ausgebildet ist. Die Anzeigeeinheit 104 ist beispielhaft als ein berührungsempfindlicher Bildschirm ausgebildet, sodass die Steuervorrichtung 100 mittels einer Betätigung beziehungsweise einer Berührung der Anzeigeeinheit 104 bedienbar und/oder steuerbar ist.

Die Steuervorrichtung 100 weist beispielhaft ein Betriebssystem auf, das zur Ausführung von Anwendungssoftware (App) ausgebildet ist. Die Steuervorrichtung 100 weist zumindest eine Fahrrad-App auf, die zur Anzeige von Betriebsinformationen des Elektrofahrrads 16 und/oder zur Steuerung des Elektrofahrrads 16 ausgebildet ist. Die Fahrrad-App umfasst dabei mehrere Funktionen, die teilweise durch den Benutzer beziehungsweise Fahrer auswählbar sind.

Die Steuervorrichtung 100 weist zumindest eine kurzreichweitige Kommunikationsschnittstelle auf, die zu der kurzreichweitigen Kommunikationsschnittstelle des Elektrofahrrads 16 korrespondiert. Die kurzreichweitige Kommunikationsschnittstelle ist beispielhaft als eine Bluetooth Schnittstelle ausgebildet. Die Steuervorrichtung 100 kann abhängig oder unabhängig von der Fahrrad-App eine Verbindung mit dem Elektrofahrrad 16 erstellen. Die erstmalige Verbindung erfolgt beispielhaft über einen Bluetooth Pairing Prozess. Durch den Pairing Prozess werden die Steuervorrichtung 100 und das Elektrofahrrad 16 miteinander gekoppelt und verbunden. Wird die Steuervorrichtung 100 von dem Elektrofahrrad 16 physisch getrennt, erfolgt auch eine Trennung der drahtlosen Kommunikation, sie verbleiben allerdings im gekoppelten Zustand. Wird die Steuervorrichtung 100 in die Nähe (beispielhaft weniger als 10 m Entfernung) des Elektrofahrrads 16 gebracht, so werden die gekoppelten Geräte automatisch verbunden und somit eine drahtlose Kommunikationsverbindung hergestellt.

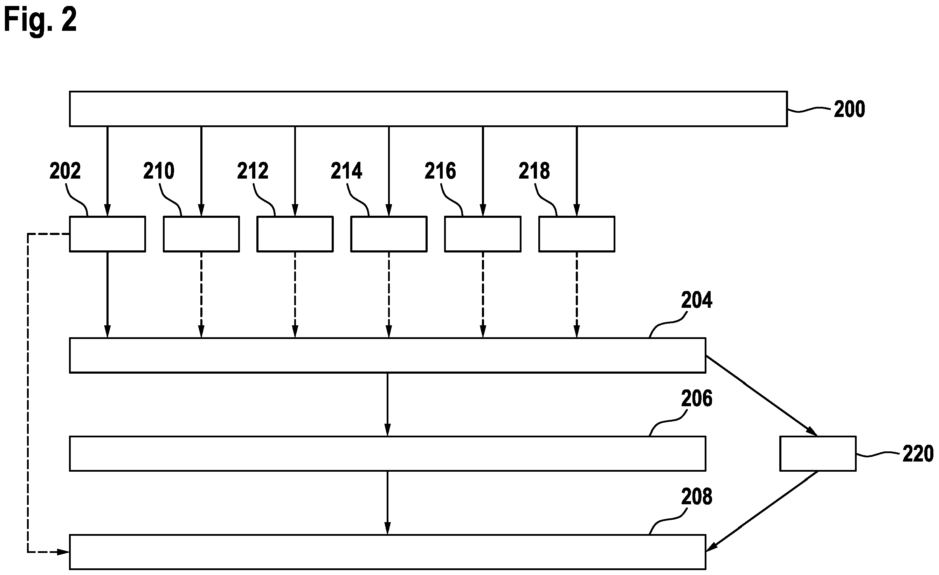

In Fig. 2 ist ein Verfahren zur Steuerung einer Anwendungssoftware, wobei die Anwendungssoftware durch die Steuervorrichtung 100 für das Elektrofahrrad 16 ausgeführt wird, in einem Flussdiagramm gezeigt.

In einem ersten Schritt 200 erfolgt die Herstellung der drahtlosen Kommunikationsverbindung zwischen dem Elektrofahrrad 16 und der Steuervorrichtung 100, beispielhaft wie zuvor beschrieben.

In einem zweiten Schritt 202 stellt das Elektrofahrrad 16 der Steuervorrichtung 100 eine Freigabeinformation bereit. Die Freigabeinformation ist beispielhaft als ein Betriebsinformation ausgebildet. Die Betriebsinformation ist beispielhaft als ein Stillstand ausgebildet.

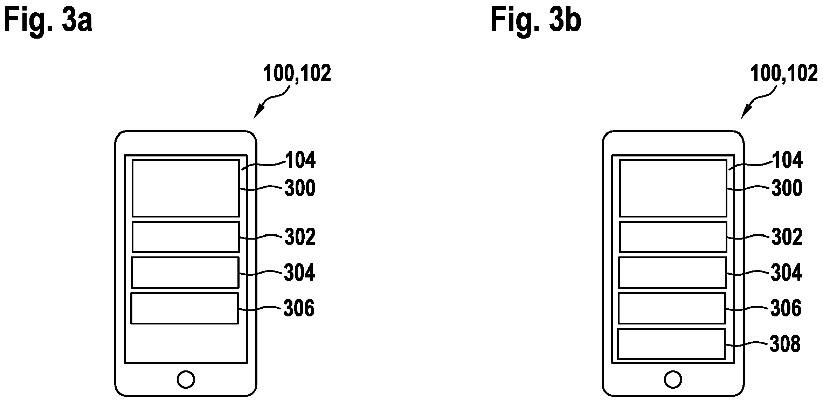

Liegt eine Freigabeinformation in Form eines Stillstands vor, so erfolgt in einem weiteren Schritt 204 die Freischaltung einer Fahrfunktion 308 (siehe Fig. 3b) der Anwendungssoftware. Die Fahrfunktion 308 wird dabei derart freigeschaltet, dass sie für den Benutzer sichtbar und betätigbar ist. Ist die Fahrfunktion 308 nicht freigeschaltet, ist diese nicht sichtbar und/oder nicht betätigbar.

In Fig. 3a ist beispielhaft eine Anzeige der Anwendungssoftware schematisch dargestellt, bei der die Fahrfunktion nicht freigeschaltet ist. Die Anwendungssoftware zeigt auf der Anzeigeeinheit 104 beispielhaft eine Elektrofahrrad-Information 300, einen Verbindungsstatus 302, einen Batteriestatus 304 und einen Navigationsfunktion 306 an. Die Elektrofahrrad-Information 300 umfasst beispielsweise Informationen über den Hersteller des Elektrofahrrads 16. Der Verbindungsstatus 302 zeigt beispielhaft an, ob eine drahtlose Kommunikationsverbindung zwischen der Steuervorrichtung 100 und dem Elektrofahrrad 16 besteht. Der Verbindungsstatus 302 ist zusätzlich betätigbar ausgebildet, sodass über eine Betätigung eine Verbindung mit dem Elektrofahrrad 16 oder einem anderen Elektrofahrrad herstellbar und/oder trennbar ist. Die Navigationsfunktion 306 ist beispielhaft derart ausgebildet, dass eine aktuell geplante Route angezeigt wird und durch eine Betätigung des Feldes Anzeige zur Navigation angepasst wird und die Navigation durch den Fahrer einstellbar ist.

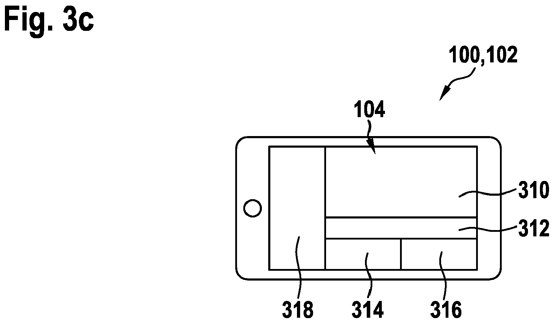

In Fig. 3b ist beispielhaft eine Anzeige der Anwendungssoftware nach dem Schritt 204 dargestellt. Durch die Freischaltung der Fahrfunktion 308 wird diese neben den anderen Funktionen dem Fahrer angezeigt. Die Fahrfunktion 308 ist beispielhaft durch den Fahrer betätigbar ausgebildet. Die Fahrfunktion 308 ist beispielhaft derart ausgebildet, dass durch Betätigung der Fahrfunktion 308 in einem Schritt 206 die Anzeigeeinheit 104 in einem darauffolgenden Schritt 208 derart angepasst wird, dass die Anzeige von einem vertikalen Modus in einen horizontalen Modus wechselt, wie in Fig. 3c dargestellt.

Die Fahrfunktion 308 ist beispielhaft als ein Fahrbildschirm ausgebildet, der zur optimalen Anpassung der Steuervorrichtung 100 während des Fahrens vorgesehen ist. Der Fahrbildschirm weist dabei im Wesentlichen nur Information auf, die für den Fahrer während der Fahrt relevant sind. Der Fahrbildschirm zeigt beispielsweise eine aktuelle Geschwindigkeit 310, den gewählten Unterstützungsmodus 312, einen Ladezustand 314 und/oder eine Reichweite des Akkupacks 25, einen Leuchtzustand 316 einer mit dem Elektrofahrrad 16 verbunden Leuchteinheit 31 sowie Fahrtinformationen 318 der aktuellen Fahrt an. Bei den Fahrtinformationen kann es sich beispielsweise um eine Fahrzeit, eine gefahrene Strecke, eine durchschnittliche Geschwindigkeit oder Kadenz und/oder eine geschätzte Ankunftszeit handeln. Es ist ebenso denkbar, dass andere Informationen anzeigbar sind oder dass die Fahrfunktion 308 mehrere Fahrbildschirme aufweist, die vom Fahrer auswählbar sind und andere Informationen anzeigen.

Die für den Fahrbildschirm benötigen Daten beziehungsweise Information werden dabei von der Elektronik des Elektrofahrrads 16 über die drahtlose Kommunikationsverbindung bereitgestellt.

Ist die Fahrfunktion 308 durch den Fahrer aktiviert werden insbesondere zusätzliche Informationen, die für den Fahrer bei der Fahrt relevant sind, von dem Elektrofahrrad 16 bereitgestellt.

Zusätzlich ist denkbar, dass bei durch den Fahrer aktivierter Fahrfunktion 308 auch Daten oder Informationen der Steuervorrichtung 100 dem Elektrofahrrad 16 bereitgestellt werden, wie beispielsweise eine Ortskenngröße, die von einem GPS-Modul der Steuervorrichtung 100 ermittelt wird.

Alternativ ist auch denkbar, dass durch die Freigabeinformation alternativ eine automatische Aktivierung der Anwendungssoftware und/oder der Fahrfunktion 308 erfolgt. Dies ist insbesondere dann vorteilhaft, wenn sich die Anwendungssoftware in einem ausgeschalteten Zustand befindet.

Weiterhin ist denkbar, dass das Verfahren zusätzliche oder alternative Freigabeinformationen aufweist, die zur Freischaltung der Fahrfunktion 308 benötigt werden. Beispielhaft ist denkbar, dass in einem Schritt 210 eine Freigabeinformation durch die Steuervorrichtung 100 bereitgestellt wird. Die Freigabeinformation ist dabei beispielhaft als eine Ortskenngröße, insbesondere als eine GPS-Information ausgebildet. Die Bereitstellung der Ortskenngröße kann dabei durch den Benutzer innerhalb oder außerhalb der Anwendungssoftware durch die Steuervorrichtung 100 gesteuert oder freigegeben werden.

Des Weiteren sind die Bereitstellung weitere Freigabeinformationen, beispielsweise durch eine Signalstärke der drahtlosen Kommunikationsschnittstelle in einem Schritt 212, durch eine Anordnung und/oder Positionierung der Steuervorrichtung 100 im mit dem Elektrofahrrad 16 verbundenen Zustand in einem Schritt 214, durch eine Verbindung der Steuervorrichtung 100 mit dem Akkupack 25 des Elektrofahrrads 16 in einem Schritt 216 und/oder durch eine vorliegende Navigationsroute oder Navigationswunsch des Fahrers in einem Schritt 218 denkbar.

Zudem ist denkbar, dass die Steuervorrichtung 100 basierend auf einem Betriebsstatus in einem Schritt 220 eine Nachricht auf der Anzeigeeinheit 104 anzeigt, wobei über eine Betätigung der Nachricht beziehungsweise ein mit der Nachricht verknüpftes Betätigungsfeld die Fahrfunktion 308 aktivierbar ist und die Steuervorrichtung den Fahrtbildschirm anzeigt. Der Betriebsstatus ist vorzugsweise derart ausgebildet, dass mittels des Betriebsstatus eine Aktivität des Fahrers und/oder das Fahren des Elektrofahrrads 16 ermittelbar ist.

## Patentansprüche

1. Verfahren zur Steuerung einer Anwendungssoftware, wobei die Anwendungssoftware durch eine Steuervorrichtung (100) für ein Elektrofahrrad (16) ausgeführt wird, umfassend folgende Schritte:
- Herstellung einer drahtlosen Kommunikationsverbindung zwischen dem Elektrofahrrad (16) und der Steuervorrichtung (100),
- Bereitstellung einer Freigabeinformation des Elektrofahrrads (16);
- Freischaltung einer Fahrfunktion (308) der Anwendungssoftware und/oder automatische Aktivierung der Anwendungssoftware.

2. Verfahren nach Anspruch 1, **gekennzeichnet durch** eine zusätzliche Bereitstellung einer Freigabeinformation der Steuervorrichtung (100).

3. Verfahren nach Anspruch 2, **dadurch gekennzeichnet, dass** die Freigabeinformation der Steuervorrichtung (100) als eine Berechtigung zur Nutzung einer Ortskenngröße der Steuervorrichtung (100) und/oder als Bereitstellung einer Ortskenngröße der Steuervorrichtung (100) ausgebildet ist.

4. Verfahren nach einem der vorhergehenden Ansprüche, **dadurch gekennzeichnet, dass** die Herstellung der drahtlosen Kommunikationsverbindung mittels einer kurzreichweitigen Kommunikationsschnittstelle erfolgt.

5. Verfahren nach Anspruch 4, **dadurch gekennzeichnet, dass** die kurzreichweitige Kommunikationsschnittstelle als eine Bluetooth Schnittstelle ausgebildet ist.

6. Verfahren nach einem der vorhergehenden Ansprüche, **dadurch gekennzeichnet, dass** die Freigabeinformation des Elektrofahrrads (16) als ein Betriebsstatus ausgebildet ist.

7. Verfahren nach Anspruch 6, **dadurch gekennzeichnet, dass** mittels des Betriebsstatus ein Stillstand des Elektrofahrrads (16) ermittelt wird.

8. Verfahren nach einem der vorhergehenden Ansprüche, **dadurch gekennzeichnet, dass** die Freischaltung der Fahrfunktion (308) durch eine erste Benachrichtigung, insbesondere eine Nachricht, einen Hinweis oder ein Betätigungsfeld in der Anwendungssoftware angezeigt wird.

9. Verfahren nach einem der vorhergehenden Ansprüche, **dadurch gekennzeichnet, dass** die Fahrfunktion (308) zur Anzeige von Betriebskenngrößen des Elektrofahrrads (16) und/oder zur Steuerung des Elektrofahrrads (16) ausgebildet ist.

10. Verfahren nach einem der vorhergehenden Ansprüche, **dadurch gekennzeichnet, dass** basierend auf dem Betriebsstatus eine zweite Benachrichtigung, insbesondere eine Nachricht oder ein Hinweis, außerhalb der Anwendungssoftware auf der Steuervorrichtung (100) angezeigt wird.

11. Verfahren nach einem der vorhergehenden Ansprüche, **dadurch gekennzeichnet, dass** die Freischaltung der Fahrfunktion (308) der Anwendungssoftware und/oder automatische Aktivierung der Anwendungssoftware in Abhängigkeit einer Signalstärke der drahtlosen Kommunikationsverbindung erfolgt.

12. Verfahren nach einem der vorhergehenden Ansprüche, **dadurch gekennzeichnet, dass** die Freischaltung der Fahrfunktion (308) der Anwendungssoftware und/oder automatische Aktivierung der Anwendungssoftware in Abhängigkeit einer Positionierung und/oder Ausrichtung der Steuervorrichtung (100) erfolgt.

13. Verfahren nach einem der vorhergehenden Ansprüche, **dadurch gekennzeichnet, dass** die Freischaltung der Fahrfunktion (308) der Anwendungssoftware und/oder automatische Aktivierung der Anwendungssoftware in Abhängigkeit eines Ladezustands oder eines Ladevorgangs der Steuervorrichtung (100) erfolgt.

14. Verfahren nach einem der vorhergehenden Ansprüche, **dadurch gekennzeichnet, dass** die Freischaltung der Fahrfunktion (308) der Anwendungssoftware und/oder automatische Aktivierung der Anwendungssoftware in Abhängigkeit einer Routeninformation erfolgt.
